# EUROPÄISCHE PATENTSCHRIFT

(11) **EP 1 074 467 B1**
(45) Veröffentlichungstag und Bekanntmachung des Hinweises auf die Patenterteilung: **29.12.2004**
(21) Anmeldenummer: 00115624.9
(22) Anmeldetag: 20.07.2000
(51) Int. Cl.: B64D 11/06, B60N 2/28, B60N 2/26

(54) **Flugzeug-Kindersitz**
Child's seat for use in an aircraft
Siège d'enfant utilisable dans un avion

(30) Priorität: 06.08.1999 DE 19937231
(43) Veröffentlichungstag der Anmeldung: 07.02.2001
(73) Patentinhaber: Lufthansa Technik AG, 22335 Hamburg (DE)
(72) Erfinder: Merensky, Harald, 22359 Hamburg (DE)
(74) Vertreter: Selting, Günther, Dipl.-Ing.

(56) Entgegenhaltungen:
- EP-A- 0 526 719
- DE-U- 8 913 568
- US-A- 3 231 306
- US-A- 4 460 215
- US-A- 5 118 163

## Beschreibung

Die Erfindung betrifft einen Flugzeug-Kindersitz, insbesondere einen Kindersitz für Kinder im Alter von bis zu zwei Jahren.

Bisher werden Kinder im Alter von bis zu zwei Jahren in Flugzeugen bei Start und Landung auf dem Schoß der Aufsichtsperson gehalten. Alternativ hierzu gibt es auch Kindersitze, die auf einem Flugzeugsitz montiert werden. Dabei wird das Kind zwar sicher gehalten, jedoch geht ein Sitzplatz für erwachsene zahlende Passagiere verloren. Für die Zeit während des Fluges, außerhalb von Start und Landung, gibt es Baby Basinets, die an den Rückseiten von Kabinentrennwänden montiert werden. In dieser Weise können auch Kindersitze montiert werden.

In EP 0 526 719 A1 ist ein gattungsgemäßer Flugzeug-Kindersitz beschrieben, der eine an einer Trennwand eines Flugzeugs zu befestigende Halterung aufweist. Die Halterung trägt einen Sitz, der in fester Höhe angeordnet ist. Zwischen dem Kindersitz und einem dem Kindersitz gegenüber angeordneten Erwachsenensitz ist ein relativ geringer Abstand vorgesehen, wobei nicht sichergestellt ist, dass der zu dem Erwachsenensitz gehörende Headstrike-Bogen frei ist.

US 5 118 163 beschreibt einen Kindersitz, der an einer Querleiste unterhalb des Erwachsenensitzes vor diesem montiert wird. Das Kind sitzt dann zwischen den Beinen einer auf dem Erwachsenensitz sitzenden Person. Bei einer speziellen Ausführungsform ist der Kindersitz an einer Trennwand des Flugzeugs unmittelbar auf dem Kabinenboden montiert.

In US 3 231 306 ist ein Kindersitz für Automobile beschrieben, der zwei Teleskopstangen aufweist, welche zwischen einer Konsole und dem Himmel des Fahrzeugs montiert werden. An den Teleskopstangen ist ein Kindersitz höhenverstellbar angebracht. Der Kindersitz weist Hülsen auf, die auf der äußeren Teleskopstange gleiten und mit Schrauben an der Teleskopstange arretiert werden können. Die Hülsen bilden eine Halterung, an der der Sitz starr angebracht ist. Es besteht keine Möglichkeit, den Sitz zu kippen, um dem Kind eine bequemere Lage zu ermöglichen.

Eine generelle Schwierigkeit bei Flugzeugsitzen besteht darin, dass durch jeden Kindersitz, der auch während der Phasen von Start und Landung benutzt wird, in der Regel ein normaler Sitzplatz verlorengeht.

Der Erfindung liegt die Aufgabe zugrunde, einen Flugzeug-Kindersitz zu schaffen, der unter Freihaltung des Headstrike-Bogens während der Phasen von Start und Landung benutzbar ist und während des Fluges eine bequeme Zuwendung des Kindes zu einem Erwachsenen ermöglicht.

Die Lösung dieser Aufgabe erfolgt erfindungsgemäß durch einen Flugzeug-Kindersitz mit den im Patentanspruch 1 angegebenen Merkmalen.

Der erfindungsgemäße Kindersitz weist eine an einer Trennwand des Flugzeugs montierbare Halterung auf, an der der Sitz in mindestens zwei Höhenpositionen fixierbar ist. Der Sitz ist bezüglich der Halterung um eine in Querrichtung zur Höhenbewegung verlaufende Achse schwenkbar und feststellbar. Dies erhöht die Variabilität des Kindersitzes. Während des Fluges kann der Sitz heruntergelassen werden, so dass er sich z.B. in Höhe des Oberkörpers der auf einem Flugzeugsitz sitzenden Begleitperson befindet. Während der Phasen von Start und Landung wird der Sitz auf die obere Position eingestellt, um den Platz vor der sitzenden Begleitperson nicht zu versperren. Die Vorschriften sehen vor, daß bei Start und Landung für jede auf einem Flugzeugsitz sitzende Person ein Headstrike-Bogen von Gegenständen freibleiben muß. Der Headstrike-Bogen begrenzt den Raum, der von Kopf und Oberkörper einer sitzenden Person im Falle einer starken Bremsverzögerung des Flugzeuges überstrichen wird. Während Start und Landung kann der Sitz oberhalb des Headstrike-Bogen des zugehörigen Flugzeugsitzes positioniert werden. Im Falle eines Unfalls wird somit eine Kollision zwischen Passagier und Kleinkind ausgeschlossen.

Der erfindungsgemäße Kindersitz hat den Vorteil, daß eine Vergrößerung des Abstandes zwischen Trennwand und erster Sitzreihe nicht erforderlich ist. Durch den Kindersitz geht somit kein Passagierraum verloren. Während des Fluges ist der Sitz auf eine für die betreuende Person günstige Position heruntergezogen. Diese untere Position ist zweckmäßigerweise variierbar bzw. einstellbar. Dagegen ist die obere Position, die die Start- und Landeposition bildet, vorzugsweise fest vorgegeben. Gemäß einer bevorzugten Weiterbildung der Erfindung ist der Sitz als Schalensitz ausgebildet und er weist ein Rückenteil und eine hierzu gelenkig verstellbare Sitzschale auf. Die Sitzschale ermöglicht wahlweise eine Sitzposition und eine Schlafposition des Kindes.

Das Rückenteil des Sitzes ist zweckmäßigerweise mit seinem oberen Ende an der Halterung aufgehängt und am Rückenteil ist eine bewegbare Stützvorrichtung zur Schrägstellung des Rückenteils in bezug auf die Trennwand vorgesehen. Dadurch besteht die Möglichkeit der Schrägstellung des gesamten Sitzes in die Schlafposition.

Um den Kindersitz im unbenutzten Zustand platzsparend unterzubringen, ist zweckmäßigerweise die Sitzschale an das Rückenteil anklappbar.

Das vertikale Verschieben des Sitzes kann durch eine den Sitz an der Halterung bewegende Antriebsvorrichtung bewirkt oder unterstützt werden. Eine solche Antriebsvorrichtung kann beispielsweise aus einem Elektromotor oder einer Gasfeder bestehen.

Im folgenden wird unter Bezugnahme auf die Zeichnungen ein Ausführungsbeispiel der Erfindung näher erläutert.

Es zeigen:

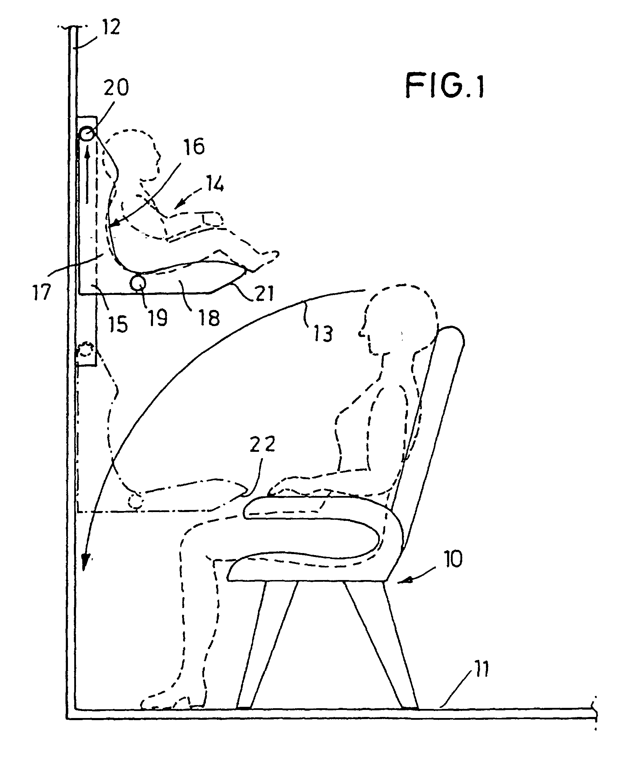

- Fig. 1: eine schematische Seitenansicht des Kindersitzes, wobei zwei Gebrauchspositionen des Sitzes eingezeichnet sind, und
- Fig. 2: eine Seitenansicht des Kindersitzes mit in der unteren Position und im schräggestellten Zustand befindlichem Sitz.

In den Zeichnungen ist ein üblicher Flugzeugsitz 10 dargestellt, der sich im Passagierraum des Flugzeugs befindet und an dem Boden 11 befestigt ist. Vor dem Flugzeugsitz 10 befindet sich eine quer zur Längsrichtung des Flugzeugs verlaufende Trennwand 12. Der Flugzeugsitz 10 hat von der Trennwand 12 einen solchen Abstand, daß ein Headstrike-Bogen 13, der im Falle des Zusammenklappens der angeschnallt sitzenden Person von dem Headstrike-Radius bestrichen wird, freigehalten wird. Dieser Bogen 13 bestimmt auch den Mindestabstand des Flugzeugsitzes 10 von der Trennwand 12.

Der Kindersitz 14 weist eine an der Trennwand 12 montierte Halterung 15 und einen an der Halterung 15 in der Höhe verfahrbaren Sitz 16 auf. Der Sitz 16 ist als Schalensitz ausgebildet und er besteht aus einem Rückenteil 17 und einer mit dem Rückenteil 17 über ein Gelenk 19 verbundenen Sitzschale 18. An dem Sitz befindet sich ein (nicht dargestellter) Sicherheitsgurt, mit dem das Kind festgeschnallt werden kann.

Das Rückenteil 17 weist an seinem oberen Ende horizontale Zapfen 20 auf, die in Führungen der Halterung 15 vertikal verschiebbar geführt sind.

Die Halterung 15 ist so ausgebildet und montiert, daß der Sitz 16 zwei verschiedene Höhenpositionen einnehmen kann, nämlich eine obere Start- und Landeposition 21 und eine untere Beschäftigungsposition 22. In der Start- und Landeposition befindet sich der Sitz 16 etwa in Kopfhöhe der auf dem Flugzeugsitz 10 sitzenden Person oberhalb des Headstrike-Bogens 13 und in der Beschäftigungsposition, in der sich die auf dem Flugzeugsitz 10 sitzende Person während des Fluges mit dem Kleinkind beschäftigen kann, befindet sich der Sitz 16 in der Höhe des Oberkörpers der auf dem Flugzeugsitz sitzenden Person, teilweise innerhalb des Headstrike-Bogens 13.

Der Sitz 16 ist in der oberen Position sicher verriegelbar. Die Beschäftigungsposition muß nicht eine bestimmte feste Position sein. Vielmehr kann der Sitz 16 im unteren Bereich der Halterung 15 auf eine wählbare Beschäftigungsposition eingestellt werden.

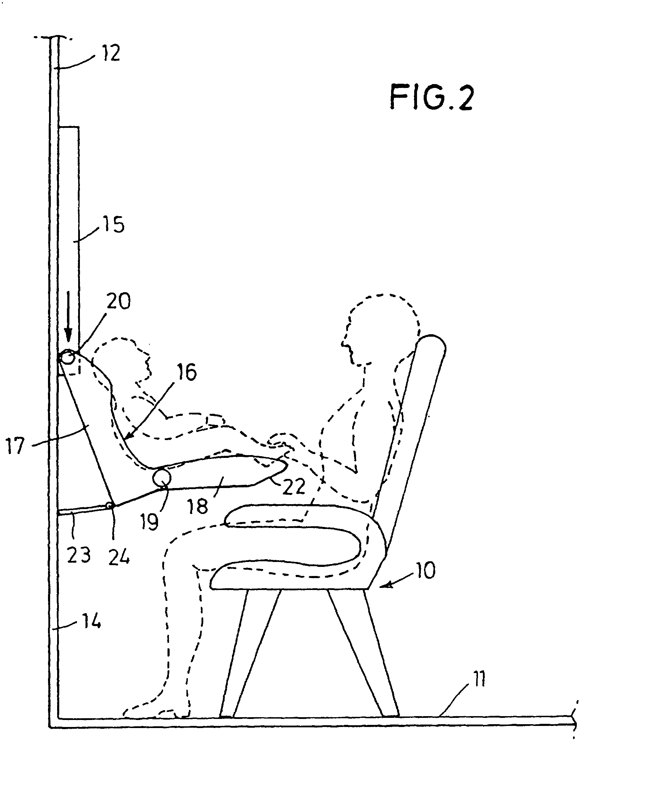

An der Rückseite des Rückenteils 17 oder an der Halterung 15 befindet sich eine Stützvorrichtung 23, die gemäß Fig. 2 herausbewegt werden kann, um den Sitz 16 in bezug auf die Trennwand 12 schrägzustellen. Die Stützvorrichtung 23 ist hier um ein Gelenk 24 des Rückenteils 17 ausschwenkbar. Sie kann an das Rückenteil angeklappt werden, wenn keine Schrägstellung des Sitzes erwünscht ist.

Aus Fig. 2 ist auch ersichtlich, daß die Sitzschale 18 in bezug auf das Rückenteil 17 um das Gelenk 19 herum geschwenkt und eingestellt werden kann, so daß der Sitz 16 auf die in Fig. 2 dargestellte Schlafposition eingestellt werden kann.

Zur Erleichterung des Anhebens des Sitzes 16 von der Beschäftigungsposition 22 in die Start- und Landeposition 21 kann eine (nicht dargestellte) Antriebsvorrichtung vorgesehen sein, die das Anheben bewirkt oder unterstützt. Ferner ist das untere Ende des Rückenteils 17 an der Halterung 15 so geführt, daß mindestens in der Start- und Landeposition das Rückenteil 17 vollständig fixiert ist und nicht ausgeschwenkt werden kann.

Die Sitzschale 18 kann ferner um das Gelenk 19 herum an das Rückenteil 17 angeklappt werden, so daß der Kindersitz im unbenutzten Zustand wenig Platz einnimmt. In diesem Zustand kann der Kindersitz auf die obere Position eingestellt werden, um die auf dem Flugzeugsitz 10 sitzende Person nicht zu behindern.

## Patentansprüche

1. Flugzeug-Kindersitz mit einer an einer Trennwand (12) montierbaren Halterung (15) und einem an der Halterung (15) befestigten Sitz (16),
**dadurch gekennzeichnet,**
**dass** der Sitz (16) an der Halterung (15) in der Höhe bewegbar und in mindestens zwei Höhenpositionen fixierbar ist und dass der Sitz (16) bezüglich der Halterung (15) um eine in Querrichtung zur Höhenbewegung verlaufende Achse (20) schwenkbar und feststellbar ist.

2. Flugzeug-Kindersitz nach Anspruch 1, **dadurch gekennzeichnet, dass** der Sitz (16) als Schalensitz ausgebildet ist und ein Rückenteil (17) und eine hierzu gelenkig verstellbare Sitzschale (18) aufweist.

3. Flugzeug-Kindersitz nach Anspruch 1 oder 2, **dadurch gekennzeichnet, dass** der Sitz (16) ein Rückenteil (17) aufweist, das mit seinem oberen Ende an der Halterung (15) aufgehängt ist, und dass das Rückenteil (17) eine bewegbare Stützvorrichtung (23) zur Schrägstellung des Rückenteils in bezug auf die Trennwand (12) aufweist.

4. Flugzeug-Kindersitz nach Anspruch 2, **dadurch gekennzeichnet, dass** die Sitzschale (18) an das Rückenteil (17) anklappbar ist.

5. Flugzeug-Kindersitz nach einem der Ansprüche 1-4, **dadurch gekennzeichnet, dass** eine den Sitz (16) an der Halterung (15) bewegende Antriebsvorrichtung vorgesehen ist.

## Claims

1. A child's seat for airplanes comprising a mounting (15) for fastening to a partition wall (12) and a seat (16) fastened to the mounting (15),
**characterized in that** the seat (16) is vertically movable along the mounting (15) and adapted to be fixed in at least two vertical positions (21, 22) and that the seat (16) may be fixed and pivoted with respect to the mounting (15) about an axis extending transversely to the vertical movement.

2. The child's seat for airplanes as of claim 1, wherein the seat (16) is a bucket seat with a back portion (17) and a molded seat surface (18) pivotally adjustable relative to the back portion.

3. The child's seat for airplanes as of claim 1 or 2, wherein the seat (16) comprises a back portion (17) suspended from the mounting (15) by its top end, and wherein the back portion (17) comprises a movable support device (23) for causing an inclined position of the back portion relative to the partition wall (12).

4. The child's seat for airplanes as of claim 2, wherein the molded seat surface (18) may be pivoted up against the back portion (17).

5. The child's seat for airplanes as of one of claims 1-4, wherein a drive means is provided for moving the seat (16) along the mounting (15).

## Revendications

1. Siège enfant utilisable dans un avion, muni d'une attache (15) pouvant être montée sur une cloison (12) et d'un siège (16) fixé à l'attache (15), **caractérisé en ce que** le siège (16) est mobile en hauteur sur l'attache (15) et peut être fixé dans au moins deux positions dans le sens de la hauteur, et le siège (16) est pivotant et peut être fixé en position par rapport à l'attache (15) autour d'un axe (20) s'étendant transversalement au mouvement dans le sens de la hauteur.

2. Siège enfant utilisable dans un avion selon la revendication 1, **caractérisé en ce que** le siège (16) est configuré comme un siège baquet et présente une pièce arrière (17) et une coque de siège (18) réglable en position de manière articulée par rapport à celle-ci.

3. Siège enfant utilisable dans un avion selon la revendication 1 ou 2, **caractérisé en ce que** le siège (16) présente une pièce arrière (17) suspendue à l'attache (15) par son extrémité supérieure, et la pièce arrière (17) présente un dispositif d'appui (23) déplaçable pour le réglage de l'inclinaison de la pièce arrière par rapport à la cloison (12).

4. Siège enfant utilisable dans un avion selon la revendication 2, **caractérisé en ce que** la coque de siège (18) peut être rabattue sur la pièce arrière (17).

5. Siège enfant utilisable dans un avion selon l'une quelconque des revendications 1 à 4, **caractérisé en ce qu'**un dispositif d'entraînement est prévu, qui déplace le siège (16) sur l'attache (15).
